# EUROPEAN PATENT SPECIFICATION

(11) **EP 3 260 499 B1**
(45) Date of publication and mention of the grant of the patent: **30.06.2021**
(21) Application number: 16752461.0
(22) Date of filing: 16.02.2016
(51) Int. Cl.: C08L 71/03, C08K 3/36, C08K 5/3465, C08K 5/3492, C08K 5/405, C08K 5/54, C09K 3/00, F16F 15/08, C08K 3/10, C08K 5/00, C08K 5/5425, C08K 5/5435, C08K 5/544, C08K 5/548, C08K 3/01

(54) **COMPOSITION FOR RUBBER VIBRATION INSULATOR, AND CROSSLINKED OBJECT OBTAINED THEREFROM**
ZUSAMMENSETZUNG FÜR KAUTSCHUKSCHWINGUNGSISOLATOR UND DARAUS ERHALTENES VERNETZTES OBJEKT
COMPOSITION POUR UN ISOLANT CONTRE LES VIBRATIONS EN CAOUTCHOUC ET OBJET RÉTICULÉ OBTENU À PARTIR DE CELLE-CI

(30) Priority: 17.02.2015 JP 2015028116
(43) Date of publication of application: 27.12.2017
(73) Proprietor: Osaka Soda Co., Ltd., Osaka-shi Osaka 550-0011 (JP)
(72) Inventor: HARADA, Tomonori, Osaka-shi Osaka 550-0011 (JP); OZAKI, Taro, Osaka-shi Osaka 550-0011 (JP); IMAOKA, Tsuyoshi, Osaka-shi Osaka 550-0011 (JP); FUNAYAMA, Toshiyuki, Osaka-shi Osaka 550-0011 (JP)
(74) Representative: Vossius & Partner Patentanwälte Rechtsanwälte mbB
(86) International application number: PCT/JP2016/054414
(87) International publication number: WO 2016/133075

(56) References cited:
- JP-A- 2007 291 331
- JP-A- 2008 007 770
- JP-A- 2012 052 063
- JP-A- 2013 067 678
- JP-A- 2014 189 607
- JP-A- 2015 034 192
- JP-A- 2015 140 366
- DATABASE CA [Online] CHEMICAL ABSTRACTS SERVICE, COLUMBUS, OHIO, US; 28 May 1988 (1988-05-28), MATOBA, YASUO ET AL: "Epichlorohydrin rubber compositions", XP002784238, retrieved from STN Database accession no. 1988:188272 -& JP S62 227950 A (OSAKA SODA CO LTD) 6 October 1987 (1987-10-06)
- DATABASE CA [Online] CHEMICAL ABSTRACTS SERVICE, COLUMBUS, OHIO, US; 19 April 2007 (2007-04-19), HAMURA, YASUSHI ET AL: "Semiconductive vulcanizable rubber composition and its vulcanized rubber material and parts", XP002784239, retrieved from STN Database accession no. 2007:432209 -& JP 2007 099788 A (DAISO CO LTD) 19 April 2007 (2007-04-19)
- DATABASE CA [Online] CHEMICAL ABSTRACTS SERVICE, COLUMBUS, OHIO, US; 6 April 2017 (2017-04-06), HARADA, TOMONORI ET AL: "Composition for heat-resistant rubber, and crosslinked product thereof", XP002784240, retrieved from STN Database accession no. 2017:560135 -& WO 2017/057024 A1 (OSAKA SODA CO LTD [JP]) 6 April 2017 (2017-04-06)
- DATABASE CA [Online] CHEMICAL ABSTRACTS SERVICE, COLUMBUS, OHIO, US; 6 October 2014 (2014-10-06), IMAOKA, TAKESHI ET AL: "Flexible epichlorohydrin rubber compositions and vulcanizates thereof", XP002784241, retrieved from STN Database accession no. 2014:1669185 -& JP 2014 189607 A (DAISO CO LTD) 6 October 2014 (2014-10-06)

## Description

### TECHNICAL FIELD

The present invention relates to a composition for antivibration rubber comprising an epichlorohydrin-based polymer as an essential component and an antivibration rubber material obtainable by crosslinking the composition. Particularly, the present invention provides a rubber composition which gives an antivibration rubber material excellent in a dynamic property.

### BACKGROUND ART

Epichlorohydrin rubber materials are widely used as fuel hoses, air hoses and tube materials in automotive applications by taking advantage of, for example, their heat resistance, oil resistance and ozone resistance. However, further improvements of heat resistance and durability in the rubber materials are desired, along with, for example, a rise in temperature in an engine room or emergence of maintenance-free automobile parts due to, for example, implementation of exhaust gas regulation measures or energy conservation measures, improvement of an engine performance and downsizing of an engine in recent years.

Conventionally, natural rubber is often used for the above-mentioned rubber materials, particularly for antivibration rubbers. However, the properties such as heat resistance and ozone resistance of the natural rubber are insufficient in use under a recently used high temperature environment.

Also, an antivibration rubber composition comprising EPDM which is double-bond free in the main chain and excellent in heat resistance as a rubber component has been disclosed as an antivibration rubber composition having good heat resistance (Patent Documents 1 and 2).

The present applicant studied an antivibration rubber composition to give antivibration rubber excellent in heat resistance by using an epichlorohydrin polymer (Patent Document 3). However, studies on formulations for better vibration-resistant property are required

Patent Document 4 relates to an epichlorhydrin-based rubber composition having proper bending durability while maintaining tensile strength and heat resistance without suggesting the use of presently claimed silane coupling agent.

### Prior Art Documents

### Patent literatures

Patent Document 1: JP 2005-113093 A
Patent Document 2: JP 2009-298949 A
Patent Document 3: JP Patent Application No. 2013-16423
Patent Document 4: JP 2014-189607 A

### SUMMARY OF THE INVENTION

### Problem to be solved by invention

The problem is to provide a rubber material having good vibration-resistant property and a composition for the rubber material, wherein the composition comprises an epichlorohydrin polymer which can be expected to have tensile strength and heat resistance desired for a rubber material.

The present inventors discovered that an epichlorohydrin rubber material obtainable by crosslinking a composition comprising an epichlorohydrin polymer, silica, a silane coupling agent, and a crosslinking agent, is excellent in vibration-resistant property while maintaining tensile strength and heat resistance desired for rubber materials, and completed the present invention based on this discovery.

That is, the present inventions relate to the followings:
< Item 1> An antivibration rubber composition comprising (A) an epichlorohydrin polymer, (B) silica having a CTAB adsorption specific surface area of 50 to 150 m²/g as measured according to JIS K 6430, (C) a silane coupling agent and (D) a crosslinking agent,
   wherein the silane coupling agent (C) is a polysulfide silane coupling agent.
<Item 2> The antivibration rubber composition according to item 1, wherein silica (B) is wet-method silica having a CTAB adsorption specific surface area of 70 to 150 m²/g.
<Item 3> The antivibration rubber composition according to item 1 or 2, which comprises 1 to 20 parts by weight of the silane coupling agent (C), based on 100 parts by weight of silica (B).
<Item 4> The antivibration rubber composition according to any one of items 1 to 3, wherein the silane coupling agent (C) is at least one coupling agent represented by the formula (2):

   R^{a}ₙ (R^{b}) ₃₋ₙSi-X'-Si-R^{a'}ₘ (R^{b'}) ₃₋ₘ (2)

   wherein
   X' is a polysulfide-containing hydrocarbon group having 1 to 20 carbon atoms which may comprise up to 10 sulfur atoms,
   R^{a} and R^{a}' are each independently a hydrocarbon group,
   R^{b} and R^{b'} are each independently a reactive group, and
   n and m are each independently 0, 1 or 2.
<Item 5> The antivibration rubber composition according to item 4, wherein X' is a polysulfide-containing alkylene group represented by

   -R^{c}-Sₓ-R^{c}-,

   wherein -R^{c}- is an alkylene group having 1 to 9 carbon atoms, and x is an integer of 2 to 6.
<Item 6> The antivibration rubber composition according to any one of items 1 to 5, wherein the crosslinking agent (D) is at least one crosslinking agent selected from quinoxalines, thioureas, and triazines.
<Item 7> The antivibration rubber composition according to any one of items 1 to 6, which comprises 10 to 70 parts by weight of silica (B) and 0.1 to 10 parts by weight of the crosslinking agent (D), based on 100 parts by weight of the epichlorohydrin polymer (A).
<Item 8> The antivibration rubber composition according to any one of items 1 to 7, which further comprises (E) an acid acceptor, wherein the acid acceptor (E) is a metal compound and/or an inorganic microporous crystal.
<Item 9> An antivibration rubber material obtainable by crosslinking the rubber composition according to any one of items 1 to 8.
<Item 10> The antivibration rubber material according to item 9, which has a static/dynamic ratio of 1.40 or less.
<Item 11> Use of an antivibration rubber comprising the antivibration rubber material according to item 9 or 10 for automobiles.
<Item 12> Use of a rubber material for antivibration,
   wherein the rubber material is obtained by crosslinking a composition comprising (A) an epichlorohydrin polymer, (B) silica having a CTAB adsorption specific surface area of 50 to 150 m²/g as measured according to JIS K 6430, (C) a silane coupling agent and (D) a crosslinking agent.
<Item 13> The use according to item 12, wherein the rubber material has a static/dynamic ratio of 1.40 or less.

### Effect of the Invention

Since the rubber material according to the present invention comprises an epichlorohydrin polymer, good tensile strength and heat resistance can be obtained. Therefore, it is extremely useful for automobile antivibration rubber which is exposed to high temperature, for example, 100°C or more.

### MODE FOR CARRYING OUT THE INVENTION

Herein, the antivibration rubber composition and the antivibration rubber material obtainable by crosslinking the antivibration rubber composition according to the present invention will be explained in detail. The antivibration rubber composition according to the present invention comprises (A) an epichlorohydrin polymer, (B) silica, (C) a silane coupling agent and (D) a crosslinking agent.

The epichlorohydrin polymer (A) used in the antivibration rubber composition according to the present invention is a polymer comprising a constitutional unit derived from epichlorohydrin and may comprise constitutional units derived from alkylene oxides such as ethylene oxide, propylene oxide and n-butylene oxide; and glycidyls such as methyl glycidyl ether, ethyl glycidyl ether, n-glycidyl ether, allyl glycidyl ether and phenyl glycidyl ether. Specific examples of the epichlorohydrin polymer (A) include an epichlorohydrin homopolymer, an epichlorohydrin/ethylene oxide copolymer, an epichlorohydrin/propylene oxide copolymer, an epichlorohydrin/ethylene oxide/allyl glycidyl ether terpolymer, and an epichlorohydrin/ethylene oxide/propylene oxide/allyl glycidyl ether quaternary copolymer. Preferable are the epichlorohydrin homopolymer, the epichlorohydrin/ethylene oxide copolymer and the epichlorohydrin/ethylene oxide/allyl glycidyl ether terpolymer. A molecular weight of the homopolymer or copolymers is not particularly limited, but usually ML₁₊₄ (100°C)= about 30 to 150 in Mooney viscosity. These homopolymers or copolymers can be used singly or in a combination of at least two.

From the viewpoint of heat resistance, the epichlorohydrin polymer (A) comprises preferably 10 mol% or more, more preferably 20 mol% or more, particularly preferably 25 mol% or more of the constitutional unit formed from epichlorohydrin. The constitutional unit formed from epichlorohydrin can be calculated from, for example, chlorine content. The chlorine content can be determined by a potentiometric titration procedure according to the method described in JIS K7229.

In the case of the epichlorohydrin/ethylene oxide copolymer, a copolymerization ratio is such that epichlorohydrin is preferably 10 mol% to 95 mol%, more preferably 20 mol% to 75 mol%, particularly preferably 25 mol% to 65 mol%, and ethylene oxide is preferably 5 mol% to 90 mol%, more preferably 25 mol% to 80 mol%, particularly preferably 35 mol% to 75 mol%.

In the case of epichlorohydrin/ethylene oxide/allyl glycidyl ether terpolymer, a copolymerization ratio is such that epichlorohydrin is preferably 10 mol% to 95 mol%, more preferably 20 mol% to 75 mol%, particularly preferably 25 mol% to 65 mol%, ethylene oxide is preferably 4 mol% to 89 mol%, more preferably 24 mol% to 79 mol%, particularly preferably 34 mol% to 74 mol%, and allyl glycidyl ether is preferably 1 mol% to 10 mol%, more preferably 1 mol% to 8 mol%, particularly preferably 1 mol% to 7 mol%.

The monomer formulation of the epichlorohydrin/ethylene oxide copolymer and the epichlorohydrin/ethylene oxide/allyl glycidyl ether terpolymer can be determined by chlorine content and an iodine value.

The chlorine content is measured by the potentiometric titration procedure according to the method described in JIS K7229. The mole fraction of the constitutional unit formed from epichlorohydrin is calculated from the obtained chlorine content.

The iodine value is measured according to JIS K 6235 method. The mole fraction of the constitutional unit formed from allyl glycidyl ether is calculated from the obtained iodine value.

The mole fraction of the constituent unit formed from ethylene oxide is calculated from the mole fraction of constituent units formed from epichlorohydrin and the mole fraction of constituent unit formed from allyl glycidyl ether.

Silica used for the antivibration rubber composition according to the present invention has a CTAB adsorption specific surface area of 50 to 150 m²/g, preferably 70 to 150 m²/g, and more preferably 75 to 145 m²/g.

The CTAB adsorption specific surface area is the specific surface area (m²/g) of silica calculated from the adsorption amount of CTAB to the silica surface. The CTAB adsorption specific surface area of silica can be measured according to JIS K6430. "CTAB" means n-hexadodecyltrimethylammonium bromide.

The method of measuring the CTAB adsorption specific surface area of silica is as follows:
A CTAB standard solution (0.0151 mol/L) is prepared and then added to a silica sample. A suspension is formed under stirring, and CTAB is adsorbed on a silica surface. After the separation of the liquid phase, non-adsorbed CTAB is determined by turbidimetric titration. The specific surface area is calculated from the adsorption amount of CTAB with assuming that the adsorption cross section per one molecule of CTAB on the silica surface is 0.35 nm².

Silica (B) used in the antivibration rubber composition according to the present invention is not particularly limited. Examples thereof include wet-method silica (hydrous silicic acid), dry-process silica (anhydrous silicic acid), calcium silicate and aluminum silicate. Wet-method silica is preferred. Wet-method silica is a hydrated silicic acid fine particle produced by, for example, acid-decomposing an aqueous sodium silicate solution or alkaline earth metal silicate, and is filler for rubber, comprising mainly silicon dioxide.

In the antivibration rubber composition according to the present invention, the content of silica (B) may be 10 to 70 parts by weight, based on 100 parts by weight of the epichlorohydrin polymer (A) . The content of silica (B) is preferably 15 to 50 parts by weight, more preferably 17.5 to 27.5 parts by weight, particularly preferably 20 to 30 parts by weight. When the content of silica (B) is 10 parts by weight to 70 parts by weight, crosslinking is sufficient, compound viscosity is appropriate, and workability is good.

In the antivibration rubber composition according to the present invention, the silane coupling agent (C) is an organosilicon compound containing two types of functional groups having different reactivities in one molecule. The silane coupling agent (C) is preferably the compound represented by the formula (2)

R^{a}ₙ (R^{b}) ₃₋ₙSi-X'-Si-R^{a'}ₘ(R^{b'})₃₋ₘ (2)

wherein
X' is a polysulfide-containing hydrocarbon group having 1 to 20 carbon atoms which comprises up to 10 sulfur atoms,
R^{a} and R^{a'} are each independently a hydrocarbon group,
R^{b} and R^{b'} are each independently a reactive group, and
n and m are each independently 0, 1 or 2.

An example of X' is a polysulfide-containing alkylene group (-R^{c}-Sₓ-R^{c}-), but not limited thereto. -R^{c}- is an alkylene group having 1 to 9 carbon atoms, and x is an integer of 2 to 6, but is not limited thereto. Examples of R^{a} and R^{a'} include a hydrocarbon group having 1 to 12 carbon atoms, such as an alkyl group, but are not limited thereto. R^{b} and R^{b'} are a reactive group chemically bondable to an inorganic material such as glass and metals. Examples of R^{b} and R^{b'} include an alkoxy group having 1 to 6 carbon atoms, such as methoxy, ethoxy, propoxy and butoxy, but are not limited thereto.

silane coupling agent, an amino silane coupling agent, a mercapto silane coupling agent, a chloroalkyl silane coupling agent, and a polysulfide silane coupling agent, and a polysulfide silane coupling agent is preferable. the silane coupling agent (C) may be used singly or in a combination of at least two.

Examples of the vinyl silane coupling agent include vinyltrimethoxysilane, vinyltriethoxysilane, vinyltris(2-methoxyethoxy)silane, allyltrichlorosilane, allyltrimethoxysilane, allyltriethoxysilane, diethoxymethylvinylsilane, trichlorovinylsilane and triethoxyvinylsilane.

Examples of the epoxy silane coupling agent include 2-(3,4-epoxycyclohexyl) ethyltrimethoxysilane, 3-glycidoxypropyltrimethoxysilane and 3-glycidoxypropyltriethoxysilane.

Examples of the methacrylic silane coupling agent include methacryloxymethyltrimethoxysilane, methacryloxymethyltriethoxysilane, methacryloxymethylmethyldimethoxysilane, methacryloxymethyldimethylmethoxysilane, γ-methacryloxypropyltrimethoxysilane, γ-methacryloxypropyltriethoxysilane, γ-methacryloxypropylmethyldimethoxysilane, γ-methacryloxypropylmethyldiethoxysilane and γ-methacryloxypropyldimethylmethoxysilane.

Examples of the acrylic silane coupling agent include acryloxymethyltrimethoxysilane, acryloxymethyltriethoxysilane, acryloxymethylmethyldimethoxysilane, acryloxymethyldimethylmethoxysilane, γ-acryloxypropyltrimethoxysilane, γ-acryloxypropyltriethoxysilane, γ-acryloxypropylmethyldimethoxysilane, γ-acryloxypropylmethyldiethoxysilane and γ-acryloxypropyldimethylmethoxysilane.

Examples of the amino silane coupling agent include 3-aminopropyltriethoxysilane, 3-aminopropyltrimethoxysilane, N-(2-aminoethyl)-3-aminopropyltrimethoxysilane, N-(2-aminoethyl)-3-aminopropylmethyldimethoxysilane and 3-(N-phenyl)aminopropyltrimethoxysilane.

Examples of the mercapto silane coupling agent include 3-mercaptopropyltrimethoxysilane and 3-mercaptopropyltriethoxysilane.

Examples of the chloroalkyl silane coupling agent include 3-chloropropyltrimethoxysilane and 3-chloropropyltriethoxysilane.

Further examples of the polysulfide silane coupling agent include the compound represented by the general formula:

(R¹-O)_{3-Y}R¹_{Y}-Si-R²-Sx-R²-Si-R¹_{Y}(O-R¹)_{3-Y} (3)

wherein R¹ is a monovalent hydrocarbon group having 1 to 5 carbon atoms,
R² is a divalent hydrocarbon group having 1 to 9 carbon atoms,
x is 2 to 6, and
Y is an integer of 0 or 1. Bis (3-triethoxysilylpropyl) disulfide (abbreviation: TESPD) and bis(3-triethoxysilylpropyl)tetrasulfide (abbreviation: TESPT) are preferable. Specifically, examples include "CABRUS 2A", "CABRUS 2B", and "CABRUS 4" (these are manufactured by Osaka Soda Co.), "Si75", "Si69" (manufactured by Degussa Co.) and "A-1289" (manufactured by GE Silicones Co.), "KBE-846" (manufactured by Shin-Etsu Chemical Co.).

In the antivibration rubber composition according to the present invention, the content of the silane coupling agent (C) may be, for example, from 0.5 to 25 parts by weight, preferably from 1 to 20 parts by weight, more preferably 2 to 17 parts by weight, particularly preferably 3 to 15 parts by weight, based on 100 parts by weight of silica (B). When the content of (C) the silane coupling agent is less than 1 part by weight, the strength of the crosslinked product is low, and when the content exceeds 20 parts by weight, it is not economical.

In the antivibration rubber composition according to the present invention, the crosslinking agent (D) is not particularly limited as long as it can crosslink the epichlorohydrin rubber. Examples thereof include known crosslinking agent utilizing the reactivity of a chlorine atom, such as polyamines, thioureas, thiadiazoles, triazines, quinoxalines and bisphenols, and also known crosslinking agent utilizing the reactivity of a side chain double bond such as organic peroxides, sulfur, morpholine polysulfides and thiuram polysulfides. Thioureas, quinoxalines and triazines are preferable, and 2-mercaptoimidazoline (ethylenethiourea), 6-methylquinoxaline-2,3-dithiocarbonate, trimercapto-S-triazine is particularly preferred. The (D) crosslinking agent may be used singly or in a combination of at least two.

Examples of the polyamines include ethylenediamine, hexamethylenediamine, diethylenetriamine, triethylenetetramine, hexamethylenetetramine, p-phenylenediamine, cumenediamine, N,N'-dicinnamylidene-1,6-hexanediamine, ethylenediaminecarbamate and hexamethylenediaminecarbamate.

Examples of thioureas include 2-mercaptoimidazoline, 1,3-diethylthiourea, 1,3-dibutylthiourea and trimethylthiourea.

Examples of thiadiazoles include 2,5-dimercapto-1,3,4-thiadiazole and 2-mercapto-1,3,4-thiadiazole-5-thiobenzoate.

Examples of triazines include 2,4,6-trimercapto-1,3,5-triazine, 2-hexylamino-4,6-dimercaptotriazine, 2-diethylamino-4,6-dimercaptotriazine, 2-cyclohexylamino-4,6-dimercaptotriazine, 2-dibutylamino-4,6-dimercaptotriazine, 2-anilino-4,6-dimercaptotriazine and 2-phenylamino-4,6-dimercaptotriazine.

Examples of quinoxalines include 2,3-dimercaptoquinoxaline, quinoxaline-2,3-dithiocarbonate, 6-methylquinoxaline-2,3-dithiocarbonate and 5,8-dimethylquinoxaline-2,3-dithiocarbonate.

Examples of bisphenols include bisphenol AF and bisphenol S.

Examples of organic peroxide include tert-butylhydro peroxide, p-menthanehydro peroxide, dicumyl peroxide, tert-butyl peroxide, 1,3-bis(tert-butylperoxyisopropyl)benzene, 2,5-dimethyl-2,5-ditert-butyl peroxyhexane, benzoylperoxide and tert-butyl peroxybenzoate.

Examples of morpholine polysulfides include morpholine disulfide.

Examples of the thiuram polysulfides include tetramethylthiuram disulfide, tetraethylthiuram disulfide, tetrabutylthiuram disulfide, dipentamethylenethiuram tetrasulfide and dipentamethylenethiuram hexasulfide.

In the antivibration rubber composition according to the present invention, the content of the crosslinking agent (D) is preferably 0.1 to 10 parts by weight, particularly preferably 0.3 to 5 parts by weight, based on 100 parts by weight of the epichlorohydrin polymer (A). If the content of the crosslinking agent (D) is less than 0.1 parts by weight, the crosslinking is insufficient. If the content of the crosslinking agent (D) exceeds 10 parts by weight, there is a possibility that the crosslinked product becomes too rigid and does not show physical properties normally expected to be shown in the crosslinked product obtained by crosslinking the epichlorohydrin rubber composition.

In the antivibration rubber composition according to the present invention, a known acid acceptor (E) can be used depending on the crosslinking agent, and a metal compound and/or inorganic microporous crystal is used.

The metal compound may be a metal oxide or hydroxide, or a metal salt. Examples of metal compound include oxides, metal compounds such as hydroxides, carbonates, carboxylates, silicates, borates and phosphites, of metals of the periodic table group II (group 2 and group 12) and oxides, basic carbonates, basic carboxylates, basic phosphites, basic sulfites and tribasic sulfates of, lead-free metals of the periodic table group IV (groups 4 and 14).

Specific examples of the metal compound include magnesium oxide, magnesium hydroxide, barium hydroxide, magnesium carbonate, barium carbonate, sodium carbonate, quick lime, hydrated lime, calcium carbonate, calcium silicate, calcium stearate, zinc stearate, phthalic acid calcium, calcium phosphite, zinc white, tin oxide, tin stearate, and basic tin phosphite. Particularly preferred acid acceptors include magnesium oxide, calcium carbonate, hydrated lime and quick lime.

The inorganic microporous crystal means a crystalline porous body, which is clearly distinguishable from an amorphous porous body such as silica gel and alumina. Examples of such inorganic microporous crystals include zeolites, alumina phosphate molecular sieves, layered silicates, hydrotalcites and alkali metal titanates. Particularly preferred acid acceptors include hydrotalcites.

Zeolites include not only natural zeolites but also various types of zeolites and metal substitutes thereof such as synthetic zeolites of A-type, X-type and Y-type, sodalites, natural or synthetic mordenite, and ZSM-5. These may be used singly or in a combination of at least two. In addition, the metal of the metal substitute is often sodium. As the zeolite, one having a large acid accepting capacity is preferable, and A-type zeolite is preferable.

The hydrotalcites are represented by the following general formula (4):

Mg_{X}Zn_{Y}Al_{Z}(OH)_{(2(X+Y)+3Z-2)}CO₃·wH₂O (4)

wherein, x and y are a real number of 0 to 10 provided that x + y = 1 to 10, z is a real number of 1 to 5, and w is a real number of 0 to 10.

Specific examples of hydrotalcites include Mg_{4.5}Al₂ (OH) ₁₃CO₃·3. 5H₂O, Mg_{4.5}Al₂ (OH) ₁₃CO₃, Mg₄Al₂ (OH) ₁₂CO₃·3. 5H₂O, Mg₅Al₂ (OH) ₁₄CO₃·4H₂O, Mg₃Al₂ (OH) ₁₀CO₃· 1.7H₂O, Mg₃ZnAl₂ (OH) ₁₂CO₃·3. 5H₂O, Mg₃ZnAl₂ (OH) ₁₂CO₃, and Mg_{4.3}Al₂ (OH) _{12.6}CO₃·3. 5H₂O.

In the antivibration rubber composition according to the present invention, the content of the acid acceptor (E) is preferably 0.2 to 50 parts by weight, particularly preferably 1 to 20 parts by weight, based on 100 parts by weight of the epichlorohydrin polymer (A) . If the content of the acid acceptor (E) is less than 0.2 parts by weight, the crosslinking is insufficient. If the content of the acid acceptor (E) exceeds 50 parts by weight, there is a possibility that the crosslinked product becomes too rigid and does not show physical property normally expected to be shown in the crosslinked product obtained by crosslinking the epichlorohydrin rubber composition.

The antivibration rubber composition according to the present invention may comprise additives other than the above-mentioned components as long as the effect of the present invention is not impaired, such as a lubricant, an anti-aging agent, an antioxidant, a filler, a reinforcing agent, a plasticizer, a processing aid agent, a flame retardant, a crosslinking accelerator and a crosslinking retarder. Further, the blending of, for example, rubber and resin, commonly performed in the technical field, can be carried out within a range deteriorating the properties of the present invention.

In order to produce the antivibration rubber composition according to the present invention, any mixing means conventionally used in the field of polymer processing, such as mixing rolls, Banbury mixers and various kneaders can be used.

The crosslinked product according to the present invention can be obtained by heating the antivibration rubber composition according to the present invention usually at 100 to 200 °C. In the crosslinking treatment, heating may be carried out in one step or in two steps. The crosslinking treatment in which heating is carried out in two stages is preferred. The crosslinking time varies depending on the temperature, but is usually from 0.5 minutes to 300 minutes. A method of crosslinking molding may be any method such as compression molding with a mold, injection molding, steam cans, air bath, heating by infrared rays and microwaves.

The rubber material according to the present invention has a static/dynamic ratio (Kd/Ks) represented by a ratio of a static spring constant (Ks) to a dynamic spring constant (Kd) of preferably 1.40 or less, more preferably 1.36 or less. Also, it can be suitably used for a vibration-resistant or a seismic isolation rubber such as a railroad vehicle vibration proof rubber, an industrial machinery vibration isolation rubber, a building seismic isolation rubber and a seismic isolation rubber bearing. Especially it is useful as a constituent member of the automobile antivibration rubber such as an engine mount, which requires heat resistance.

### EXAMPLE

Hereinafter, the present invention will be specifically described with Examples, but the present invention is not limited to these descriptions.

Measurement methods of physical properties are as follows: - CTAB adsorption specific surface area of silica is in accordance with JIS K 6430: 2008.

30 mL of CTAB standard solution (0.0151 mol/L) is added to 1 g of silica sample that passed through a sieve. A suspension is generated under stirring at 23 to 27 °C for 35 minutes to adsorb CTAB on the silica surface. Silica is separated from the CTAB solution by using a centrifuge settler, syringe, or membrane filter. The separated liquid phase is titrated with a solution of sodium di-2-ethylhexyl sulfosuccinate (0.00389 mol/L) to obtain non-adsorbed CTAB. The specific surface area is calculated from the adsorption amount of CTAB with assuming that the adsorption cross section per one molecule of CTAB on the silica surface is 0.35 nm².

| | |
|---|---|
| • Tensile stress: | In accordance with JIS K 6251: 2010, |
| • Tensile strength: | In accordance with JIS K 6251: 2010, |
| • Elongation: | In accordance with JIS K 6251: 2010, |
| • Hardness: | In accordance with JIS K 6253: 2012, |
| • Change rate before and after heat aging test: | In accordance with JIS K 6257: 2010, |
| • Static spring constant: | In accordance with JIS K 6385: 2012, |
| • Dynamic spring constant: | In accordance with JIS K 6385: 2012. |

### Example 1 and 2 and Comparative Example 1

Substances were kneaded with a kneader and an open roll in the formulation shown in Table 1 to prepare an uncrosslinked rubber sheet having a thickness of 2 to 2.5 mm. In order to carry out the evaluation of tensile properties and heat resistance, the obtained uncrosslinked rubber sheet was press-crosslinked at 170°C for 15 minutes to obtain a primary crosslinked product having a thickness of 2 mm. Further, the primary crosslinked product was heated in an air oven at 150°C for 2 hours to obtain a secondary crosslinked product. Using the obtained secondary crosslinked product, a tensile test was carried out according to JIS K 6251 and a heat aging test was carried out according to JIS K 6257, acceleration aging test A-2. The dynamic properties were measured with a dynamic servo manufactured by Saginomiya Seisakusho Co., Ltd. The measurement conditions were such that a static spring constant is a ratio of a static load to a displacement in a 1 to 2 mm section when a test piece is compressed to 0 to 3 mm; and a dynamic spring constant is a ratio of a dynamic load to a displacement when a preset compression ratio of the test piece is 5%, a strain amplitude is ± 0.1% and a frequency is 100 Hz.

The test results obtained from each test method are shown in Table 2. In each table, M₃₀₀ is a tensile stress at 300% elongation determined in the tensile test, T_{B} is a tensile strength determined in the tensile test, E_{B} is an elongation determined in the tensile test, Hs is a hardness determined in the hardness test of JIS K 6253. Also, ΔT_{B}, ΔE_{B} and ΔHₛ respectively indicate a rate of change of tensile strength, a rate of change in elongation, and a difference in hardness (standard is hardness before the heat aging test) before and after the heat aging test.

**Table 1**

| Unit: parts by weight | | | |
|---|---|---|---|
| | Example 1 | Example 2 | Com. Example 1 |
| ECH/EO/AGE copolymer *¹ | 100 | 100 | 100 |
| Wet-method silica 1 ^{*2} | 20 | | |
| Wet-method silica 2 *³ | | 20 | |
| Wet-method silica 3 *⁴ | | | 20 |
| Silane coupling agent *⁵ | 3 | 3 | 3 |
| Di(butoxyethoxy)ethyl adipate (plasticizer) | 10 | 10 | 10 |
| Nickel dibutyldithiocarbamate (anti-aging agent) | 1 | 1 | 1 |
| Sorbitan stearate (lubricant) | 3 | 3 | 3 |
| Magnesium oxide (acid acceptor) | 3 | 3 | 3 |
| O,O'-dibenzamidodiphenyl disulfide (accelerator) | 0.5 | 0.5 | 0.5 |
| Ethylene thiourea (crosslinking agent) | 0.9 | 0.9 | 0.9 |
| Sulfur | 0.1 | 0.1 | 0.1 |

| | | | |
|---|---|---|---|
| *1: Epichlorohydrm/ethylene oxide/allyl glycidyl ether copolymer: "Epichlomer-CG-105" manufactured by Osaka Soda Co., Ltd. *2: "Nipsil ER" (CTAB adsorption specific surface area: 80 m²/g) manufactured by Nippon Silica Co., Ltd. *3: "Carplex # 67" (CTAB adsorption specific surface area: 140 m²/g, manufactured by DSL. Japan Co., Ltd.) *4: DSL "NIPSEAL VN 3" (CTAB adsorption specific surface area: 160 m²/g) manufactured by Nippon Silica Co., Ltd. *5: "Silane coupling agent: CABRUS 2" compound name: bis (triethoxysilylpropyl) disulfide manufactured by Osaka Soda Co., Ltd. | | | |

**Table 2**

| | Example 1 | Example 2 | Com. Example 1 |
|---|---|---|---|
| <Normal state physical properties> | | | |
| M₃₀₀ (MPa) | 6.3 | 6.3 | 5.6 |
| T_{B} (MPa) | 10.7 | 14.0 | 15.0 |
| E_{B} (%) | 425 | 490 | 545 |
| Hs (JIS A) | 49 | 49 | 53 |

| <Heat aging test (100°C, 70h)> | | | |
|---|---|---|---|
| ΔT_{B}(%) | -15 | -26 | -20 |
| ΔE_{B} (%) | -21 | -27 | -26 |
| ΔHs (pts.) | +6 | +7 | +4 |

| <Dynamic properties> | | | |
|---|---|---|---|
| Ks (N/mm) | 102.5 | 100.4 | 118.0 |
| Kd (N/mm) | 137.2 | 131.7 | 171.8 |
| Kd/Ks | 1.34 | 1.31 | 1.46 |

Examples 1 and 2, which are antivibration rubber materials obtained by crosslinking the composition comprising silica having the specific CTAB adsorption specific surface area defined according to the present invention, show a low static/dynamic ratio (Kd/Ks). Comparative Example 1, which is an antivibration rubber material obtained by crosslinking the composition comprising silica having the specific CTAB adsorption specific surface area outside of the present invention, shows a high static/dynamic ratio(Kd/Ks) despite the same formulation weight of silica.

In addition, it is shown that the antivibration rubber materials described in Examples 1 and 2 have low static/dynamic ratios, as well as normal state physical properties generally expected as rubber materials, and is excellent in heat resistance.

### INDUSTRIAL APPLICABILITY

The present invention can provide a composition based on epichlorohydrin rubber, having improved tensile strength and heat resistance, and a crosslinked rubber material of the composition. Therefore, the composition can be suitably used for an antivibration rubber or a seismic isolation rubber such as a railroad vehicle vibration proof rubber, an industrial machinery vibration isolation rubber, a building seismic isolation rubber and a seismic isolation rubber bearing. Especially, the composition can be suitably applied to a constituent member of the automobile antivibration rubber such as engine mount, which requires heat resistance.

## Claims

1. An antivibration rubber composition comprising (A) an epichlorohydrin polymer, (B) silica having a CTAB adsorption specific surface area of 50 to 150 m²/g as measured according to JIS K 6430, (C) a silane coupling agent and (D) a crosslinking agent,
wherein the silane coupling agent (C) is a polysulfide silane coupling agent.

2. The antivibration rubber composition according to claim 1, wherein silica (B) is wet-method silica having a CTAB adsorption specific surface area of 70 to 150 m²/g.

3. The antivibration rubber composition according to claim 1 or 2, which comprises 1 to 20 parts by weight of the silane coupling agent (C), based on 100 parts by weight of silica (B).

4. The antivibration rubber composition according to any one of claims 1 to 3, wherein the silane coupling agent (C) is at least one coupling agent represented by the formula (2):
R^{a}ₙ (R^{b}) ₃₋ₙSi-X'-Si-R^{a'}ₘ(R^{b'})₃₋ₘ (2)
wherein
X' is a polysulfide-containing hydrocarbon group having 1 to 20 carbon atoms which may comprise up to 10 sulfur atoms,
R^{a} and R^{a'} are each independently a hydrocarbon group,
R^{b} and R^{b'} are each independently a reactive group, and
n and m are each independently 0, 1 or 2.

5. The antivibration rubber composition according to claim 4, wherein X'is a polysulfide-containing alkylene group represented by -R^{c}-Sₓ-R^{c}-,
wherein -R^{c}- is an alkylene group having 1 to 9 carbon atoms, and x is an integer of 2 to 6.

6. The antivibration rubber composition according to any one of claims 1 to 5, wherein the crosslinking agent (D) is at least one crosslinking agent selected from quinoxalines, thioureas, and triazines.

7. The antivibration rubber composition according to any one of claims 1 to 6, which comprises 10 to 70 parts by weight of silica (B) and 0.1 to 10 parts by weight of the crosslinking agent (D), based on 100 parts by weight of the epichlorohydrin polymer (A).

8. The antivibration rubber composition according to any one of claims 1 to 7, which further comprises (E) an acid acceptor, wherein the acid acceptor (E) is a metal compound and/or an inorganic microporous crystal.

9. An antivibration rubber material obtainable by crosslinking the rubber composition according to any one of claims 1 to 8.

10. The antivibration rubber material according to claim 9, which has a static/dynamic ratio of 1.40 or less.

11. Use of an antivibration rubber comprising the antivibration rubber material according to claim 9 or 10 for automobiles.

12. Use of a rubber material for antivibration,
wherein the rubber material is obtained by crosslinking a composition comprising (A) an epichlorohydrin polymer, (B) silica having a CTAB adsorption specific surface area of 50 to 150 m²/g as measured according to JIS K 6430, (C) a silane coupling agent and (D) a crosslinking agent.

13. The use according to claim 12, wherein the rubber material has a static/dynamic ratio of 1.40 or less.

## Patentansprüche

1. Eine schwingungsdämpfende Kautschukzusammensetzung, umfassend (A) ein Epichlorhydrinpolymer, (B) Siliciumdioxid mit einer spezifischen Oberfläche (CTAB-Adsorption) von 50 bis 150 m²/g, gemessen nach JIS K 6430, (C) ein Silankupplungsmittel und (D) ein Vernetzungsmittel,
wobei das Silankupplungsmittel (C) ein Polysulfidsilankupplungsmittel ist.

2. Die schwingungsdämpfende Kautschukzusammensetzung nach Anspruch 1, wobei das Siliciumdioxid (B) ein Nassverfahren-Siliciumdioxid mit einer spezifischen Oberfläche (CTAB-Adsorption) von 70 bis 150 m²/g ist.

3. Die schwingungsdämpfende Kautschukzusammensetzung nach Anspruch 1 oder 2, welche 1 bis 20 Gewichtsteile des Silankupplungsmittels (C) umfasst, basierend auf 100 Gewichtsteilen des Siliciumdioxids (B).

4. Die schwingungsdämpfende Kautschukzusammensetzung nach einem der Ansprüche 1 bis 3, wobei das Silankupplungsmittel (C) mindestens ein Kupplungsmittel dargestellt durch Formel (2) ist:
R^{a}ₙ(R^{b})₃₋ₙSi-X'-Si-R^{a'}ₘ(R^{b'})₃₋ₘ (2)
wobei
X' eine polysulfidhaltige Kohlenwasserstoffgruppe mit 1 bis 20 Kohlenstoffatomen ist, welche bis zu 10 Schwefelatome umfassen kann,
R^{a} und R^{a'} jeweils unabhängig eine Kohlenwasserstoffgruppe sind,
R^{b} und R^{b'} jeweils unabhängig eine reaktive Gruppe sind, und
n und m jeweils unabhängig 0, 1 oder 2 sind.

5. Die schwingungsdämpfende Kautschukzusammensetzung nach Anspruch 4, wobei X' eine polysulfidhaltige Alkylengruppe ist, dargestellt durch -R^{c}-Sₓ-R^{c}-,
wobei -R^{c}- eine Alkylengruppe mit 1 bis 9 Kohlenstoffatomen ist und x eine ganze Zahl von 2 bis 6 ist.

6. Die schwingungsdämpfende Kautschukzusammensetzung nach einem der Ansprüche 1 bis 5, wobei das Vernetzungsmittel (D) mindestens ein Vernetzungsmittel ausgewählt aus Chinoxalinen, Thioharnstoffen und Triazinen ist.

7. Die schwingungsdämpfende Kautschukzusammensetzung nach einem der Ansprüche 1 bis 6, welche 10 bis 70 Gewichtsteile Siliciumdioxid (B) und 0,1 bis 10 Gewichtsteile des Vernetzungsmittels (D) umfasst, basierend auf 100 Gewichtsteilen des Epichlorhydrinpolymers (A).

8. Die schwingungsdämpfende Kautschukzusammensetzung nach einem der Ansprüche 1 bis 7, welche ferner (E) einen Säureakzeptor umfasst, wobei der Säureakzeptor (E) eine Metallverbindung und/oder ein anorganischer mikroporöser Kristall ist.

9. Ein schwingungsdämpfendes Gummimaterial, erhältlich durch Vernetzen der Kautschukzusammensetzung nach einem der Ansprüche 1 bis 8.

10. Das schwingungsdämpfende Gummimaterial nach Anspruch 9, welches ein Verhältnis statisch/dynamisch von 1,40 oder weniger aufweist.

11. Verwendung eines schwingungsdämpfenden Gummis, der das schwingungsdämpfende Gummimaterial nach Anspruch 9 oder 10 umfasst, für Kraftfahrzeuge.

12. Verwendung eines Gummimaterials zur Schwingungsdämpfung,
wobei das Gummimaterial durch Vernetzen einer Zusammensetzung, umfassend (A) ein Epichlorhydrinpolymer, (B) Siliciumdioxid mit einer spezifischen Oberfläche (CTAB-Adsorption) von 50 bis 150 m²/g, gemessen nach JIS K 6430, (C) ein Silankupplungsmittel und (D) ein Vernetzungsmittel, erhalten wird.

13. Die Verwendung nach Anspruch 12, wobei das Gummimaterial ein Verhältnis statisch/dynamisch von 1,40 oder weniger aufweist.

## Revendications

1. Composition de caoutchouc anti-vibration comprenant (A) un polymère d'épichlorhydrine, (B) de la silice ayant une surface spécifique d'adsorption CTAB de 50 à 150 m²/g comme mesurée selon JIS K 6430, (C) un agent de couplage de silane et (D) un agent de réticulation,
dans laquelle l'agent de couplage de silane (C) est un agent de couplage de silane de polysulfure.

2. Composition de caoutchouc anti-vibration selon la revendication 1, dans laquelle la silice (B) est de la silice de procédé par voie humide ayant une surface spécifique d'adsorption CTAB de 70 à 150 m²/g.

3. Composition de caoutchouc anti-vibration selon la revendication 1 ou 2, qui comprend de 1 à 20 parties en masse de l'agent de couplage de silane (C), sur la base de 100 parties en masse de silice (B).

4. Composition de caoutchouc anti-vibration selon l'une quelconque des revendications 1 à 3, dans laquelle l'agent de couplage de silane (C) est au moins un agent de couplage représenté par la formule (2) :
R^{a}ₙ(R^{b})₃₋ₙSi-X'-Si-R^{a'}ₘ(R^{b'})₃₋ₘ (2)
dans laquelle
X' est un groupe hydrocarboné contenant du polysulfure ayant de 1 à 20 atomes de carbone qui peut comprendre jusqu'à 10 atomes de soufre,
R^{a} et R^{a'} sont chacun indépendamment un groupe hydrocarboné,
R^{b} et R^{b'} sont chacun indépendamment un groupe réactif, et
n et m sont chacun indépendamment 0, 1 ou 2.

5. Composition de caoutchouc anti-vibration selon la revendication 4, dans laquelle X' est un groupe alkylène contenant du polysulfure représenté par -R^{c}-Sₓ-R^{c}-, dans laquelle -R^{c}- est un groupe alkylène ayant de 1 à 9 atomes de carbone, et x est un nombre entier de 2 à 6.

6. Composition de caoutchouc anti-vibration selon l'une quelconque des revendications 1 à 5, dans laquelle l'agent de réticulation (D) est au moins un agent de réticulation choisi parmi des quinoxalines, thiourées, et triazines.

7. Composition de caoutchouc anti-vibration selon l'une quelconque des revendications 1 à 6, qui comprend de 10 à 70 parties en masse de silice (B) et de 0,1 à 10 parties en masse de l'agent de réticulation (D), sur la base de 100 parties en masse du polymère d'épichlorhydrine (A).

8. Composition de caoutchouc anti-vibration selon l'une quelconque des revendications 1 à 7, qui comprend de plus (E) un accepteur d'acide, dans laquelle l'accepteur d'acide (E) est un composé de métal et/ou un cristal microporeux inorganique.

9. Matériau de caoutchouc anti-vibration pouvant être obtenu par réticulation de la composition de caoutchouc selon l'une quelconque des revendications 1 à 8.

10. Matériau de caoutchouc anti-vibration selon la revendication 9, qui présente un rapport statique/dynamique de 1,40 ou inférieur.

11. Utilisation d'un caoutchouc anti-vibration comprenant le matériau de caoutchouc anti-vibration selon la revendication 9 ou 10 pour des automobiles.

12. Utilisation d'un matériau de caoutchouc pour anti-vibration, dans laquelle le matériau de caoutchouc est obtenu par réticulation d'une composition comprenant (A) un polymère d'épichlorhydrine, (B) de la silice ayant une surface spécifique d'adsorption CTAB de 50 à 150 m²/g comme mesurée selon JIS K 6430, (C) un agent de couplage de silane et (D) un agent de réticulation.

13. Utilisation selon la revendication 12, dans laquelle le matériau de caoutchouc présente un rapport statique/dynamique de 1,40 ou inférieur.
